# EUROPEAN PATENT APPLICATION

(11) **EP 4 617 718 A1**
(43) Date of publication of application: **17.09.2025**
(21) Application number: 24163065.6
(22) Date of filing: 12.03.2024
(51) Int. Cl.: G01S 7/4865, G01S 7/4861, G01S 17/10, G01S 7/487, G01S 7/4913, H01L 31/107, G01S 17/931

(54) **LIGHTING CIRCUIT, LIGHT SENSOR, SYSTEM AND METHOD FOR MEASURING A DISTANCE**

(71) Applicant: Valeo Vision, 93012 Bobigny Cedex (FR)
(72) Inventor: MIMOUN, Mickael, 93012 BOBIGNY CEDEX (FR); GOURDON, Matheo, 93012 BOBIGNY CEDEX (FR); BEDDAR, Sidahmed, 93012 BOBIGNY CEDEX (FR); RENAUD, Pierre, 93012 BOBIGNY CEDEX (FR); PIQUARD, Geoffrey, 93012 BOBIGNY CEDEX (FR)
(74) Representative: Valeo Visibility

(57) **Abstract**

The invention relates to a lighting circuit having a light sensor configured to measure a delay of reception of light that is being modulated based on a binary code after a reflection, said binary code being repeated for a predetermined time period T. The light sensor comprises:
- a single-photon avalanche diode (SPAD) circuit (320) comprising a SPAD polarized by a voltage modulated by the code delayed of time k*ΔT,
- an integrator (330) connected to the SPAD circuit (320) for providing an integration value of the conduction time of a SPAD (321) for each time the code is completely received.

## Description

### Technical Field

The invention relates to a lighting circuit, a light sensor, and to a system and a method for measuring a distance using such a light sensor.

### Background Art

Obstacle detection in vehicles is commonly made using lidars. However, the LIDAR systems use a Laser diode that emits coherent light. An obstacle is provided with Laser light and the reflection is measured with the LIDAR sensor.. The reflected light is demodulated for measuring the time between the emission and the reception of the laser pulses, and the time is translated into a distance. However, the Laser diodes are costly, and are difficult to integrate with other systems such as for example a headlight of an automotive vehicle. Further, processing of the LIDAR signals requires strong computation means working at high frequency, which is expensive and power consuming.

### Summary of the Invention

The invention aims to provide a new light sensor for measuring the ToF, making the demodulation and the correlation of the signals without using strong processing means. In the invention, the demodulation and decorrelation are made at the same time by the light sensor comprising a single-photon avalanche diode circuit polarized by a voltage modulated by the emitted code delayed with different lag times. The light sensor of the invention comprises an integrator circuit for demodulating the received light with different time lags. An integration of the conduction time is made during each repetition of the period of the code corresponding to different lag times so the provided integrated values correspond to received light correlated with different lag times.

More particularly the invention provides a lighting circuit comprising a light emitter configured to emit light, a light sensor configured to measure a delay of reception of light,the emission of light being modulated based on a binary code.The light sensor comprises :
- at least one single-photon avalanche diode (SPAD) circuit comprising at least one SPAD polarized by a polarization voltage modulated by the binary code delayed of time k*ΔT, k being an integer varying between zero and n-1, n being an integer such that n*ΔT = T, T being a time period corresponding to a time of flight of a maximum distance of a measurement range, and k varying at each time the binary code is completely received,
- at least one integrator circuit connected to the SPAD for integrating a conduction time of the SPAD and providing an integration value of the conduction time for each time period T.

Preferentially, the SPAD circuit can comprise one SPAD serially connected with a polarization resistor between a reference voltage and the polarization voltage, a node between the SPAD and the resistor being connected to the integrator circuit.

For improving the resolution, the SPAD circuit can comprise several branches of one SPAD serially connected with one polarization resistor. Each branch can comprise a node between the SPAD and the polarization resistor, and each node being connected to the integrator circuit through a link resistor.

For providing a digital output, the light sensor can comprise at least one analog to digital converter placed after the integrator circuit.

For providing the ToF, each integration value is compared with a reference value. When the comparison indicates that the integration value is higher than the reference value then the integration value is memorized to be the reference value for next comparison(s) and the corresponding delay is memorized. After several comparisons corresponding to different delays spaced of a resolution time and covering the period of the code, the memorization means comprises the highest integration value and the delay corresponding to the time difference between the emission and the reception.

The processing means can be integrated in the sensor when a time duration of the binary code is equal to the time period T, the light sensor further comprises:
- at least a first memorization means connected to the at least one integrator circuit for memorizing the integration value of the conduction time at the end of each time period T,
- at least a second memorization means for memorizing a reference value and an associated delay,
- at least one comparator connected to the at least one first and second memorization means for comparing at the end of each time period T the integration value with the reference value and for storing the highest value in the second memorization means together with the corresponding value of k.

According to a preferred embodiment, the light sensor can comprise at least one analog to digital converter placed between the integrator circuit and the first memorization means.

For having a distance image showing different object located in the field of view, the light sensor can comprise a plurality of SPAD circuits arranged in a matrix, each SPAD circuit being connected to an integrator circuit, and the light sensor comprises an equal number of first memorization means than number of SPAD circuits.

For reducing the size of a sensor comprising a matrix of SPAD circuits, the number of analog to digital converters can be lower than the number of SPAD circuits.

Still for reducing the size of a sensor comprising a matrix of SPAD circuits, the second memorization means can be included in a memory and the comparator can be a processor.

Preferentially, the light sensor can be built into a single integrated circuit.

The invention further provides a system intended to measure a distance comprising:
- a code generator providing repeatedly a binary code,
- a light source connected to the code generator for emitting light modulated with the binary code,
- a light sensor according to the invention, said sensor being connected to the code generator.

According to a preferred embodiment, the light source can be a vehicle headlight.

According to another aspect, the invention provides a method for measuring a distance using a time of flight of light, said method comprising the following steps:
- emitting light modulated repeatably with a binary code:
- receiving a reflection of said modulated light;
- measuring a delay between the emission and the reception of said binary code, wherein measuring the delay comprises for each time period T, the steps of :
- polarizing a single-photon avalanche diode with a polarization voltage modulated by the binary code delayed of time k*ΔT, k being an integer varying from zero to n-1, n being an integer such that n*ΔT = T, T being a time period corresponding to maximum distance of a measurement range, and k varying at each time the binary code is completely received;
- integrating the conduction time of the single-photon avalanche diode for each value of k;
- comparing the integrated value of conduction time with a reference value; and
- if the integrated value of conduction time with is higher than the reference value, memorizing the integrated value of conduction time to be the reference value for next time period T and the corresponding value of k;
and wherein, after n time periods T, providing the memorized value of k as the delay corresponding to the delay between the emission and the reception of said binary code

According to a variant, the method can comprise, after n time periods T and before providing the memorized value of k as the delay corresponding to the delay between the emission and the reception of said binary code, the following steps:
- making a statistic analysis (1090) of all the integrated values of conduction time for determining which is a real maximum correlation value,
- providing (1100) the memorized value of k together with the reference value,
- filtering (1110) the value of k by deletion of the value of k when the corresponding reference value is not a real maximum correlation value.

### Brief description of the Drawings

The invention will be detailed with reference to the annexed drawings in which:
Figure 1 shows an automotive vehicle including the invention,
Figure 2 shows a lighting circuit! system according to the invention,
Figure 3 shows a spectrum diagram of a white LED,
Figure 4 shows a detailed diagram of a light sensor according to the invention,
Figure 5 shows a timing diagram of signals used in the invention,
Figure 6 shows a flowchart implemented by the invention,
Figure 7 shows a variant of flowchart implanted by the invention,
Figure 8 shows a first variant of the light sensor according to the invention,
Figure 9 shows a second variant of the light sensor according to the invention,
Figure 10 shows a variant of figure 4,
Figure 11 shows a third variant of the light sensor according to the invention,
Figure 12 shows another variant of flowchart implanted by the invention.

### Detailed Description of the invention

In such a way to simplify the present specification, a same reference is used on different drawings for designing a same element or an equivalent element. For a representation reason, the timing diagrams are not made with an exact scale for showing details that cannot be shown otherwise.

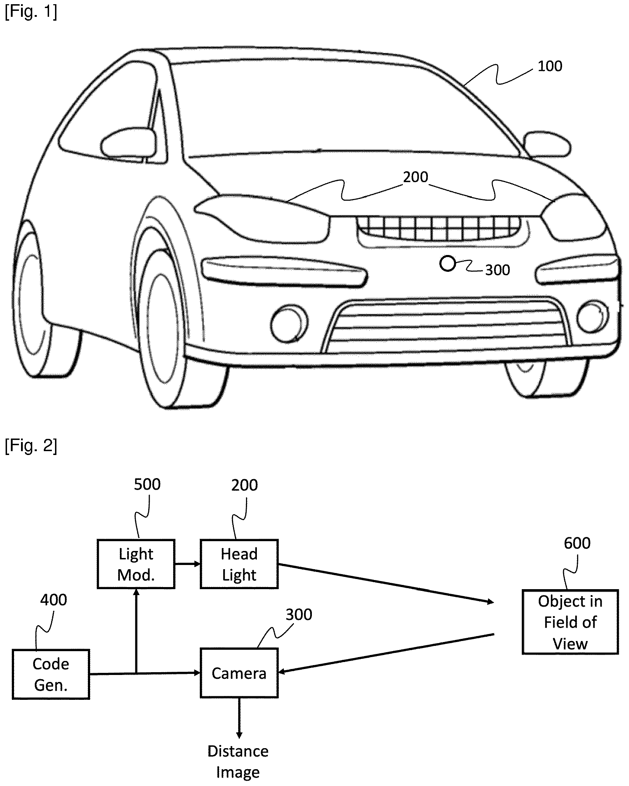

Figure 1 represents an automotive vehicle 100 comprising a light source(s) 200 and a camera 300. According to the invention, the light source 200 can be a headlight of the automotive vehicle 100. In a preferred embodiment, the light sources 200 are inorganic light emitting diodes, or LEDs, emitting incoherent light, as opposed to laser emitting diodes such as Vertical Cavity Surface Emitting Laser VCSELs emitting coherent light. The headlight 200 and the camera 300 are parts of a lighting circuit/system as shown on figure 2.

The lighting circuit! system of figure 2 comprises the light emitter i.e., the headlights 200, the camera 300, a code generator 400, and a light modulator 500. The code generator 400 is connected to the light modulator 500 and to the camera 300. The headlights 200 comprise light emitting diodes (LEDs). The light modulator 500 can be a LED driver connected to the head lights 200 for supplying the LEDs. A code is provided by the code generator 400 to the light modulator 500 which controls the headlights 200 for providing light modulated by the code. The modulated light can highlight an object 600 located in front of the head light 200 and in the field of view of the camera 300. The reflected light is received by the camera 300 which is a light sensor capable of providing a distance image by measurement of the Time of Flight (ToF) of the light from the headlight 200 to the object 600 and then to the camera 300.

In order to measure the ToF, the camera 300 must discriminate the light emitted by the headlights 200 from other light that could be emitted or reflected by the object 600. A first discrimination can be made by using light emitting diodes (LEDs) in the headlights 200.

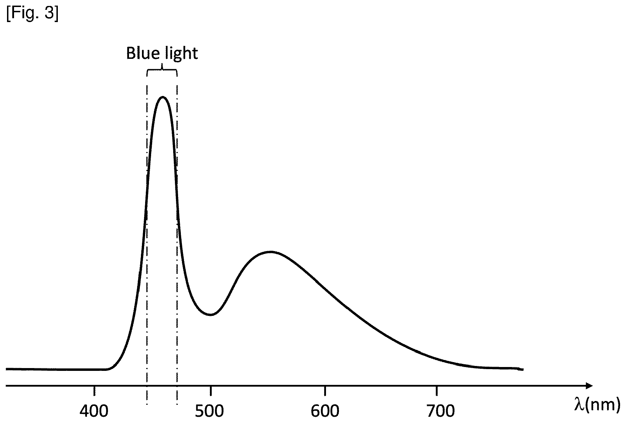

Figure 3 shows the light spectrum of a white LED, and it appears that even if the light is spread in the visible spectrum, it remains a peak of light in the spectrum of blue light around a wavelength comprised between 440 and 450 nanometers. So, a first discrimination of the light is made by placing a blue filter on the camera 300 in such a way the light sensor of the camera only receives blue light. The use a blue light filter is not mandatory with the light sensor of the invention, but it can improve the signal to noise ratio of the light sensor because blue light is specific to white LED and does not correspond to a large quantity of light of other light sources that could illuminate the object 600 like incandescent lamp, mercury vapor lamp or ambient sunlight. In addition, if the headlights 200 use other kinds of light than LED, the filter could be eliminated or adapted to another wavelength.

The main discrimination of the light emitted by the headlights 200 is based on the code modulating the emitted light. In such a way to reduce the size of the camera 300, the invention provides a camera light sensor that can be integrated in a single integrated circuit. The light sensor according to the invention enables to make a code discrimination by demodulating the received light with the code in such a way to directly provide a distance image. In a preferred embodiment, the light is modulated at a data rate higher than 1 MB/s, preferably higher than 10 MB/s, or even greater. When the light sources are powered with such a control signal, they emit a train of light pulses, at least one of the light pulses being shorter than 1µs, preferably shorter than 100ns.. The ToF is measured between the emission and the reception of one code. The code should be sufficiently long in bits for avoiding any confusion with another emitter, as an example another automotive vehicle emitting modulated light.The first light beam thus emitted consists of the train of light pulses. The pulses follow one another at a high pulse frequency, for example greater than 10 MHz, corresponding to a minimum pulse duration lower than 100ns, at which the human eye can no longer distinguish them. Furthermore, the amplitude, width and/or position of each pulse with respect to the period enables the first light beam to transport the data sequence, such that a reflection of the first light beam on an object transports the data sequence to the reception module. In addition, the time of emission of the code must be preferably chosen equal to or higher than the ToF corresponding to maximum distance to measure for avoiding a folding of the measure. As an example, the code can comprise at least 60 bits, each bit having a duration of 20 nanoseconds for a total emission time of 1,2 microseconds during which the light has traveled 360 meters enabling the lighting circuit/system measure a distance with an object 600 located at 180 meters.

The principle of the invention consists in a direct demodulation of the light modulation code by a light sensor at the pixel level. The demodulation is made during a step of measurement equal to emission time of the code by a modulated polarization of a single-photon avalanche diode (SPAD) receiving the light. The modulated polarization is made by modulating a polarization voltage by the code delayed by a delay. the steps of measurement are repeated with different delays varying from 0 to the emission time of the code with a time step ΔT. As an example, a time step ΔT can be equal to 1 nanosecond corresponding to a measured step of distance of 15 centimeters. For each step of measurement, the code is demodulated by the code delayed of k*ΔT, k being an integer varying between zero and n-1, n being an integer such that n*ΔT equals to the emission time of the code. The demodulation made during each step of measurement is integrated for obtaining a correlation value associated to the corresponding delay. Each correlation value is then compared with a previous correlation value for determining which delay corresponds to the highest correlation value. And the delay corresponding to the highest correlation value corresponds to a measure of distance. As an example, with an emission time of the code of 1,2 microseconds and a time step of 1 nanosecond, 1200-time steps are needed for making the 1200 demodulations and the total demodulation time can be equals to 1,44 milliseconds which enables to have a distance image each 1,67 milliseconds corresponding to 60 frames per seconds.Thus, a control signal modulated at a data rate inferior to 100Mb/s is preferred, as it allows for a good balance between light emission efficiency and data rate. Such a data rate corresponds to the train of light pulses, wherein none of the light pulses encoding a bit of the data sequence is shorter than 10ns.

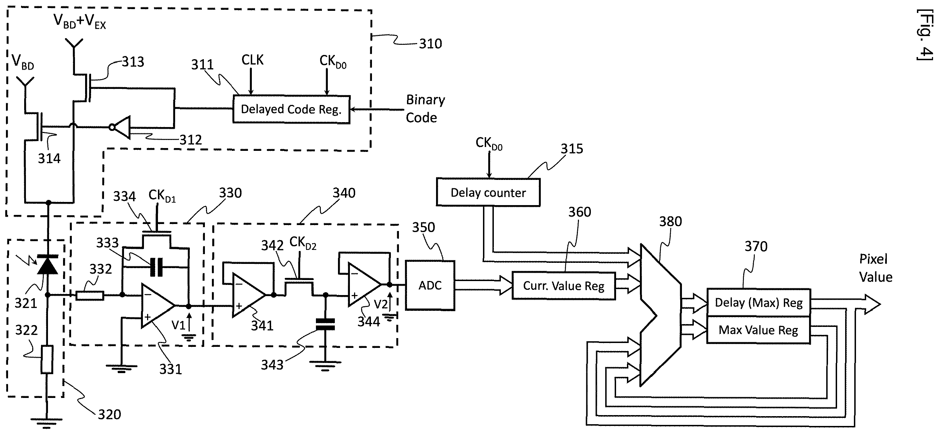

Figure 4 shows a detailed diagram of an image sensor according to the invention but limited to a single pixel for explaining how the distance image is taken. The light sensor of figure 4 comprises a polarization circuit 310, a single-photon avalanche diode (SPAD) circuit 320, an integrator circuit 330, a sampler 340, an analog to digital converter (ADC) 350, a first register 360, second registers 370, and a comparator 380.

The polarization circuit 310 receives the binary code provided by the code generator 400 which is used for modulating the light emitted by the headlights 200. The output of the polarization circuit 310 provides a polarization voltage modulated by the binary code delayed of a time k*ΔT. The modulation consists in providing a neutral voltage when the delayed code corresponds to a "zero" and a detection voltage when the delayed code corresponds to a "one". The neutral voltage can be equal to the breakdown voltage VBD of a SPAD, but it could be a lower voltage. The importance is that a SPAD cannot detect a photon when the polarization voltage is equal to the neutral voltage. The detection voltage can be equal to the breakdown voltage VBD plus an excess voltage VEX enabling to trigger the SPAD when a photon is received by the SPAD.

To have such functionalities, the polarization circuit 310 can comprise a shift register 311, an inverter 312, a first transistor 313 and a second transistor 314. The shift register 311 is a programmable shift register that receives the code on one serial input and provides the delayed code on a serial output. The shift register 311 receives on a first input a clock signal CLK having a period equal to a time step ΔT for clocking the input and the output of the code and of the delayed code in and out said register 311. The shift register comprises a second input for receiving an increasing signal CKD0 for increasing one time step ΔT the delay of the code between the input and the output. The output of the shift register 311 is connected to an input of the inverter 312 and to a gate of the first transistor 313. An output of the inverter 312 is connected to a gate of the second transistor 313. A drain of the first transistor 312 receives the detection voltage VBD+VEX, and a drain of the second transistor 313 receives the neutral voltage VBD. Sources of the first and second transistors 312 and 313 are both connected to the output of the polarization circuit 310 for providing either the detection voltage VBD+VEX or the neutral voltage VBD, as a function of the delayed code provided by the output of the shift register 311.

Many other possibilities of design of the polarization circuit 310 are possible. The shift register 311 can be made according to a different design of programmable shift register known in the art. NMOS transistors can be replaced by other kinds of transistors. Depending on the choice of transistors, the output of the shift register 311 can be adapted for controlling the transistors. The use of a neutral voltage lower than the breakdown voltage is possible but it slows the raising of the voltage up to the detection voltage VBD+VEX.

As a variant, a delay counter can be integrated in the shift register 311 for selecting an output bit of a parallel output of a standard shift register and providing a value k representative of the delay applied to the delayed code to other parts of the camera sensor. If the shift register does not include a delay counter, a delay counter 315 should be added to the camera sensor for providing the value k. The delay counter 315 can be a simple counter receiving the increasing signal CKD0 as a clock signal for increasing the value k.

The SPAD circuit 320 comprises a single-photon avalanche diode (SPAD) 321 and a polarization resistor 322. The SPAD 321 is reverse connected between the output of the polarization circuit 310 and the polarization resistor 322, the other terminal of polarization resistor 322 being connected to the ground. The node between the SPAD 321 and the polarization resistor 322 forms an output of the SPAD circuit 320. When the SPAD circuit 320 is polarized by the neutral voltage VBD, the SPAD 321 is blocked and the voltage at the output of the SPAD circuit is equal to the ground voltage. When the SPAD circuit 320 is polarized by the detection voltage VBD+VEX, the SPAD 321 reverse conducts each time a photon is received. The reverse conduction of the SPAD 321 makes the current flowing through the polarization resistor 322 and the voltage at the output of the SPAD circuit 320 increases up to the excess voltage VEX. But when the voltage at the terminals of the SPAD 321 becomes equal to the breakdown voltage VBD, the SPAD 321 is blocked again and the output of the SPAD circuit 320 returns to the ground voltage and the voltage at the terminal of the SPAD 321 returns to the detection voltage VBD+VEX, waiting a new photon to be conductive again. If the flow of photons is important when the polarization voltage is equal to the detection voltage VBD+VEX, the voltage oscillates between the ground voltage and the excess voltage VEX at the output of the SPAD circuit 320.

The integrator circuit 330 comprises a first input connected to the output of the SPAD circuit 320, a second input receiving a reset signal CKD1, and an output providing a time integration of signal received on the first input. The integrator circuit 330 is used for integrating a conduction time of the SPAD 321 since the last reset of the integrator circuit 330.

As an example, the integrator circuit 330 can comprise a differential amplifier 331, a resistor 332, a capacitor 333, and a transistor 334. The differential amplifier 331 has a positive input connected to the ground voltage, a negative input connected to the first input through the resistor 332, and an output corresponding to the output of the integrator circuit 330. The capacitor 330 is connected between the negative input and the output of the differential amplifier 331. A gate of the transistor 334 receives the reset signal CKD1. A drain and a source of the transistor 334 are respectively connected to each terminal of the capacitor 333 for shorting and discharging the capacitor 333 when the reset signal is active. Such integrator circuit 330 is well known in the art, and it can be replaced by many other kinds of integrator circuit having a reset capability.

The sampler 340 aims to memorize the output value of the integrator circuit 330 at the end of a step of measurement. The sampler 340 can comprise a first follower amplifier 341, a controlled switch 342, a memorizing capacitor 343, and a second follower amplifier 344. An input of the first follower amplifier is connected to the output of the integrator circuit 330. An output of the first follower amplifier is connected to a first terminal of the memorizing capacitor 343 through the controlled switch 342. The controlled switch 342 is controlled by a sampling signal CKD2. As an example, the controlled switch 342 can be a transistor. A second terminal of the memorizing capacitor 343 is connected to the ground. The second follower amplifier 344 has an input connected to first terminal of the memorizing capacitor 343 and an output constituting the output of the sampler 340. When the sampling signal CKD2 turns on the controlled switch 342, the memorizing capacitor 343 is charged at a value corresponding to the output voltage of the integrator circuit 330. When the sampling signal CKD2 turns off the controlled switch 342, the memorizing capacitor 343 memorizes the voltage that is reproduced by the second follower amplifier 344 at the output of the sampler 340.

The ADC 350 can be a well-known analog to digital converter having an analog input connected to the output of the sampler 340, and a digital output providing a word of bits representative of the input voltage.

The first register 360 is a well-known parallel register having one input connected to the output of the ADC 350 for digitally memorizing the integration value made by the integrator circuit 330 in view of a digital processing.

The use of the sampler 340, the ADC 350, and the first register is a choice of design for having a digital processing after the demodulation during one step of measure. The capacitor 343 and the first register 360 memorize a same value and constitute first means of memorization. A digital conversion can be made later in the processing chain and, in that case, the first register 360 can be unnecessary. In addition, for some analog to digital converters, the sampler 340 can be unnecessary because it is part of the ADC.

The second register 370 comprises two registers, one for memorizing a previous value and another corresponding to delay value k associated with the memorized previous value. The second register 370 comprises an output corresponding to an output of the light sensor for providing the memorized value of k as a distance value between the object 600 and the camera 300. The comparator 380 is a comparator comprising two comparison inputs for comparing the current value contained in the first register 360 with the memorized previous value contained in the second register 370. If the comparison indicates that the previous value is lower than the current value, the content of the second register 370 is unchanged for a next comparison. If the comparison indicates that the previous value is lower than the current value, then the current value and the value k provided by the delay counter 315 are loaded in the second register 370 for a next comparison.

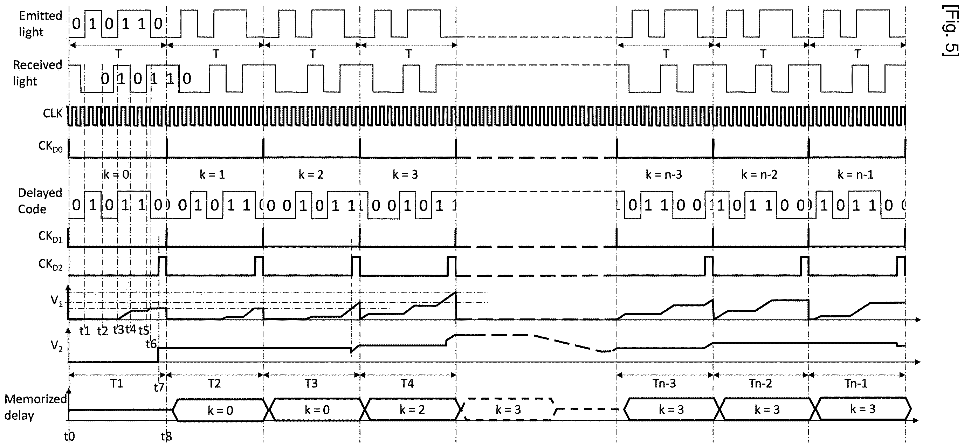

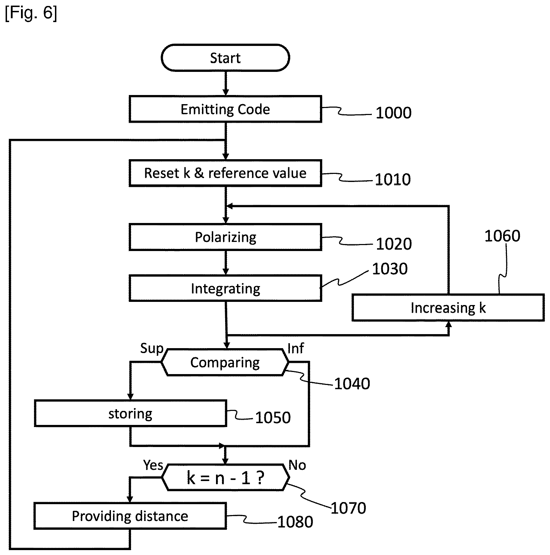

The functioning of a lighting circuit/system using the light sensor of the invention can be detailed in relation with the timing diagram of figure 5 together with the flow chart of figure 6.

In figure 5, the code used for the modulation of light has a length of only 6 bits for representation reason. Still for representation reasons we consider that the duration of one bit is 2 nanoseconds with a time step ΔT of 1 nanosecond. The number n of delays to be used is equal to 12. With such values, a step of measurement has a value corresponding to a time duration of the code of 12 nanoseconds. Such a duration of the code enabling a measurement on a maximum distance of 1,8 meters, the person skilled in the art will understand that such values are not realistic for a real measurement and are given for explanation only.

The figure 5 represents several timing diagrams corresponding from top to bottom to:
- the emitted light modulated by the code and emitted by the headlight 200 wherein light is off when a bit is "0" and the light is on when a bit of the code is "1";
- the received light which corresponds to the reflection by the object 600 of the emitted light;
- the clock signal CLK having a period of 1 nanosecond;
- the increasing signal CK_{D0};
- the delayed code corresponding to the code modulating the polarization voltage the polarization circuit 310 provides a polarization voltage equal to the neutral voltage V_{BD} when the bit value is "0" and equal to the detection voltage V_{BD}+V_{EX} when the bit value is "1";
- the reset signal CK_{D1};
- the sampling signal CK_{D2};
- the Voltage V1 which corresponds to the output of the integrator circuit 330;
- the voltage V2 which corresponds to the output of the sampler 340; and
- the value k of the delay memorized in the second registers 370.

The figure 6 details the method of measurement of distance of a lighting circuit/system using the sensor of the invention.

A first step 1000 consists in the emission of modulated light. A binary code having a time period T is generated continuously and repeatedly by the code generator 400. The light modulator 500 provides a modulated supply voltage to the head lights 200 which emits light modulated by the code.

The emitted light can highlight and object 600. And a reflection of the emitted light by the object 600 can be received by the sensor of the invention. The measurement of the distance with the object can be made by measuring the delay between the emission and the reception of said binary code at the reception of modulated light by the sensor of the invention.

During a reset step 1010, which can be performed the first time when the sensor is powered on, the value k is set to zero for the shift register 311 and for the delay counter 315 in such a way no delay is applied by the shift register 311. All the values of the first and second registers 360 and 370 are also set to zero. Then, the measurement of the distance starts at time t0 on the left of figure 5. The measurement is made by repetition of measurement steps each time the binary is completely received, i.e. each time period T in this example.

During each measurement step, it is performed a polarization step 1020 consisting of the polarization of the SPAD circuit 320 with a voltage modulated by the binary code delayed of time k*ΔT the value k being equal to zero for the first measurement step. An integration step 1030 is performed during the polarization step 1020 for integrating the conduction time of the SPAD circuit 320. As an example, on figure 5, between times t0 and time t3, even when the delayed code polarizes the SPAD circuit 320 with the detection voltage VBD+VEX between t1 and t2 the voltage V1 stays at zero volt because ; between times t3 and t4, the delayed code polarizes the SPAD circuit 320 with the detection voltage VBD+VEX while the received light is present, causing the voltage V1 to increase; between times t4 and t5, the voltage V1 stay at same level because there is no received light; between times t5 and t6, the voltage V1 increases due to reception of light during the polarization of the SPAD circuit 320 with the detection voltage VBD+VEX; between times t6 and t8, the voltage V1 stays at the level of time t6.

Between times t7 and t8, the sampling signal CKD2 turns on, enabling the voltage V2 to copy the voltage V1, the voltage V2 being memorized after time t8. At time t8, the voltage V2 is representative of the time integration of the conduction time of the SPAD 321 for a value of k equal to 0.

A comparison step 1040 starts to be performed after time t8. Still at time t8, the increasing signal CKD0 and the reset signal CKD1 are activated briefly for increasing the value k and discharging the capacitor 333 during a step 1060 before performing a new polarization step 1020 and a new integrating step 1030 in parallel of the comparison step 1040 with another delay on the delayed code, the value of k being increased during the step 1060.

The comparison step 1040 consists in the digitalization of voltage V2 by the ADC 350 and the memorization in the first register 360 followed by the comparison by the comparator 380. When the value of the first register 360 is higher than a previous memorized value, the comparator 380 stores the value of the first register 360 together with the corresponding value of k in the second register 370 during a step 1050.

The polarization step 1020, integration step 1030 and the comparison step 1040 are repeated for each value of k with k increasing after each time period T corresponding to the duration of the binary code. As it can be seen on figure 5, the received light is delayed by around 3,5 nanoseconds. At the end of the first and second time periods T1 and T2 the voltage value V1 (or V2) are the same. The voltage value V1 (or V2) is increased at the end or the third time period T3. The voltage value V1 (or V2) reaches its maximum value at the end of the fourth period T4 which corresponds to the closest matching of the delayed code with the received light. The voltage value V1 (or V2) never reaches the maximum value after the fourth period T4. The consequence is that the first comparison memorizes in the second registers the value of V1 and the value k=0 at the first comparison. These values are unchanged when the second comparison occurs. After the third comparison, the value of V1 and the value k=2 corresponding to the third period T3 are memorized in the second registers. After the fourth comparison, the value of V1 and the value k=3 corresponding to the third period T3 are memorized in the second registers. These values are kept unchanged for all other comparisons following the fourth comparison.

After each comparison, the current value of k is compared with a maximum value equal to n-1 during step 1070. When the current value of k reaches the maximum value n-1, the values memorized in the second registers 370 correspond to the maximum value that can reach the voltage value V1 (or V2) and the value of k corresponding to the delay for which the maximum value of the voltage value V1 (or V2) has been reached. A delivery step 1080 provides on the output of the value of k which is representative of the measure of distance. After the delivery step 1080, it is possible to make another measurement by performing the reset step 1010.

In the flow chart of figure 6, the comparison step 1040 is made in parallel with integration steps 1030, but these two steps can be made one after the other. A variant of flowchart is shown on figure 7. In this variant, step 1060 increasing the value k and discharging the capacitor 333 can be made after step 1070 if the current value of k is lower than the maximum value equal to n-1. Of course, the timing diagram of figure 5 does not correspond to this variant.

The circuit of figure 4 shows the circuit of a light sensor having only one pixel, which can be sufficient for some use cases. But for having an image representative of distances of different objects 600 located in a field of view, several circuits of figure 4 can be built on a single integrated circuit. The output of the sensor can then provide serially the output of each pixel value at the end of each step 1080. The number of pixels in a single integrated circuit can be limited to the number of circuits of figure 4 that can be integrated on said integrated circuit. For increasing the number of pixels on the integrated circuit, it is possible to pool certain components in view to reduce the global size of the circuit.

The figure 8 shows a variant having a plurality of SPAD circuits 3201 to 320m arranged in a matrix of pixels and comprising integrator circuits 3301 to 330m, ADCs 3501 to 350m, and first register 3601 to 360m in a same number than the SPAD circuits 3201 to 320m. The SPAD circuits 3201 to 320m are polarized by the same polarization circuit 310. The output of each SPAD circuit 3201 to 320m is connected to an input of an integrator circuit 3301 to 330m. The output of each integrator circuit 3301 to 330m is connected to an input of an ADC 3501 to 350m. An output of each ADC 3501 to 350m is connected to an input of first register 3601 to 360m. The outputs of the first registers 3601 to 360m are all connected to the bus of a processor 381 replacing the comparator 180. The delay counter 315 is also connected to the bus, together with a memory 371 replacing the second registers 370, and an output interface for extracting the image the value k from the memory 371 and providing said image on an output of the integrated circuit. The memory 371 must be large enough for storing at least a same number of previous values and of k-value as the number of SPADs. The processor 381 can be a simplified processor only capable to run a sequential program of comparison consisting of sequential make a comparison of the value of each first register 3601 to 360m with each corresponding previous value and for memorizing the result of each comparison as previously indicated.

The figure 9 shows another variant of the circuit of figure 8 in which the ADCs are pooled. The SPAD circuits 3201,1 to 320j,i are arranged in a matrix of pixels and comprising integrator circuits 3301,1 to 330j,i, samplers 3401,1 to 340j,i, and first register 3601,1 to 360j,i in a same number than the SPAD circuits 3201,1 to 320j,i. The SPAD circuits 3201,1 to 320j,i are polarized by the same polarization circuit 310. The output of each SPAD circuit 3201,1 to 320j,i is connected to an input of an integrator circuit 3301,1 to 330j,i. The output of each integrator circuit 3301,1 to 330j,i is connected to an input of a sampler 3401,1 to 340j,i. An output of each sampler 3401,1 to 340j,i is connected to an input of a multiplexer 3511 to 351j. An output of each multiplexer 3511 to 351j is connected to the input of an ADC 3501 to 350j. An output of each ADC 3501 to 350j is connected to an input of a demultiplexer 3521 to 352j. Each output of each demultiplexer 3521 to 352j is connected to an input of first register 3601,1 to 360j,i. The outputs of the first registers 3601,1 to 360j,i are all connected to the bus of the processor 381. Such a variant enables to divide the number of ADC by a number j. The number of ADC can be different than the number of processors because a comparison can be made faster than a digital conversion if the ADC is a successive weighing ADC.

Some improvements or variants can be made depending on the use case in which the sensor is used. First a SPAD can detect a photon, which is relatively sensitive for a low level of light. Such a sensitivity is relatively interesting for detecting reflected light coming from an object located at a high distance and/or having a low coefficient of reflectivity. Nevertheless, the SPAD circuit 320 shown on figure 4 comprises only one SPAD 321 which can be more sensitive to noise and saturated when the received light comes from objects located at short distance and/or having a high coefficient of reflectivity. In such a way to prevent a saturation of the SPAD circuit 320 and to decrease noise sensitivity, it can be preferred to have the SPAD circuit of figure 10.

The SPAD circuit 320 of figure 10 comprises p branches of one SPAD 3211 to 321p, each SPAD 3211 to 321p being serially connected with one polarization resistor 3221 to 322p. Each branch is connected between the output of the polarization circuit 310 and the ground. The node between each SPAD 3211 to 321p and each polarization resistor 322 is connected to an output of the SPAD circuit 3221 to 322p through a link resistor 3231 to 323p. The link resistors 3231 to 323p replace the input resistor 332 of the integrator circuit 330. The link resistors 3231 to 323p allows each branch to operate independently of each other in the same way as the SPAD circuit of figure 4. The fact to have p branches multiply by p the number of photons that can be received by the SPAD circuit 320 before being saturated increases the resolution of received noise.

The example of use case previously described enables a measurement range up to 180 meters with 60 bits each having a duration of 20 nanoseconds. In addition, the output is made only on the distance image which considerably decreases the output bit rate of the sensor and allows to have several pixels. Nevertheless, a shorter distance of measurement can be sufficient. In addition, it can be preferred to increase the bit length of the code for increasing the discrimination between two codes of neighboring vehicles. With the previously disclosed embodiments the increasing of bit length implies a strong reduction in the bit duration which decreases the time of integration for each bit and so the resolution of the SPAD circuit 320.

Another solution can consist in using a code having a longer duration longer than the time period T in such a way to make a correlation between received and emitted code for delays corresponding only to a distance range of interest. In that case, for one or more pixels, a maximum of correlation value can be wrongly detected in the range of interest while the real maximum of correlation is outside the range of interest. For avoiding such a false detection, a statistical analysis on all the integrated values can be performed for identifying the real and false maximum of correlation values. Then, in the distance image, all the pixel values which do not correspond to a real maximum of correlation value can be deleted. Making the statistical analysis in real time needs a powerful processor possibly including neural networks or other artificial intelligence dedicated circuits. Such a powerful processor needs a large area on an integrated circuit and may strongly reduce the number of pixels of a sensor.

Figure 11 discloses a variant of the invention enabling it to perform a statistical analysis. The circuit of figure 11 is derived from the circuit of figure 8 but the integrated circuit only comprises polarization circuit 310, the delay counter 315, the SPAD circuits 320i, the integrator circuits 330i, the ADCs 350j, the first registers 360j, and the output interface 390. A dual port memory 372 has a first port memory connected to the output interface and a second port connected to a processor 382. The dual port memory 72 and the processor 382 can be in a single integrated circuit. The main difference with figure 8 is that all integrated values are outputted from the sensor circuit for an external processing. In addition, the processing means being removed from the integrated circuit, more pixels can be integrated in the sensor circuit.

The figure 12 details a variant of the method of measurement of distance with the invention including the statistical analysis on the architecture circuit of figure 11. The flowchart of figure 12 is derived from the flowchart of figure 6 and differs from it by the addition of three steps 1090, 1100, 1110 and the change of some values. The steps 1010 to 1080 are identical to the steps of figure 6 but steps 1000, 1010, 1020, 1030, and 1060 are performed by in the integrated circuit containing the sensor while the steps 1040, 1050, 1070 are performed by the external processor 382.

Before detailing the new steps 1090, 1100, 1110, it should be noted that the values are defined differently than the previous example. The time period T is defined to correspond to the measurement range, as an example a range of 22.5 meters corresponds to a time period T equal to 150 nanoseconds. The value n can be equal to 150 with a time step ΔT equal to 1 nanosecond. The maximum duration of the code is defined according to the number n and the time of one frame. As an example, for 60 frames per seconds, the time of one frame is 16,7 milliseconds, divided by n, the maximum duration of the code can be 111 microseconds. With a bit duration of 20 nanoseconds, it is possible to use a code having up to 5555 bits. Considering the large number of bits, the code can have some properties for facilitating the identification of a maximum.

As an example, the code can be divided into groups of bits forming symbols providing a particular shape of correlation depending on the delay. Each symbol can comprise a number NB of lighted-on bits. Each lighted-on bit is followed by a group of lighted-off bits wherein each group of lighted-off bits of the symbol comprises a different number of zero between 1 and NB. The number of zeros is equal to NB*(NB+1)/2, the size of a group is NB*(NB+3)/2 bits, the number of symbols is equal to NB!, and the ratio of lighted-on bits is equal to 2/(NB/3). Such kind of symbols have the particularity to have a maximum correlation surrounded by two minimum of correlation at a level zero when the delay is equal at +/- 1 bits, and two pikes of correlation when the delay is equal at +/- 2 bits, and the ratio between the maximum correlation and the surrounding pikes is equal to NB. A code formed with this kind of symbols in a sensibly equal number for each symbol keeps the same property of one symbol, and other pikes of correlation will be lower than the maximum correlation. In a particular example, NB can be chosen equal to 5, which correspond to a group of 20 bits for one symbol, 120 different symbols can be used in the groups of bits, the code can comprise 5540 corresponding to 277 symbols, each symbol being present two or three times in the code.

With such values, the step 1090 is made at the end of the step 1030 to perform a statistical analysis based on all the integrated values, in parallel of the steps 1040, 1050, and 1070. The statistical analysis can consist in verifying that the higher pike of integrated values is surrounded by two minimum values and two pikes having a ratio of NB with the central pike for identifying this pike to be a maximum correlation value. One bit corresponding to 20 nanoseconds, only the 40 nanoseconds on each side of a pike should be considered for this analysis, the analysis being made on 81 integrated values. Considering that the sampling of the integrated value is not synchronized with the maximum correlation value, the amplitude relation between the pikes surrounding the real maximum correlation may not be exactly equal to NB. But the shape of the integrated values located +/-40 nanoseconds around the maximum are located on a predefined curve. With artificial intelligence, it is possible to detect if the maximum is located on the curve corresponding to the maximum correlation value, and also to determine the delay where the real maximum correlation value is.

The step 1100 is located just after step 1070 for providing an image comprising for each pixel the maximum integration value and the associated delay.

The step 1110 is a filtering step performed after the 1100 and the step 1090. This filtering consists in the adjustment of the delays provided at step 1100 as a function of the statistical analysis performed at step 1090. The filtering can consist in the deletion of delay, if this delay is associated to a maximum value that is not identified to be a maximum correlation value. The step 1080 can then be performed after step 1110.

As an alternative, when the filtering step 1090 is performed with artificial intelligence, the delay can be adjusted to a delay corresponding to the real maximum of integration, during the filtering step 1110.

As indicated in the present specification, many variants of the invention are possible. The comparison of the voltage value can be made with an analog comparator instead of a digital comparator. The memorization means can be of different types. The different functional circuits can be replaced by equivalent circuits. As an example, the SPAD circuit can be replaced by another structure of SPAD circuit known in the art that can be more or less sensitive. The person skilled in the art can modify the disclosed circuits according to different choices of design without departing from the scope of the invention as defined in the annexed set of claims.

## Claims

1. A lighting circuit comprising:
a light emitter (200) configured to emit light;
a light sensor (300) configured to measure a distance based on a delay of reception of light, the emission of light being modulated based on a binary code, wherein the light sensor (300) comprises :
- at least one single-photon avalanche diode (SPAD) circuit (320) comprising at least one SPAD polarized by a polarization voltage modulated by the binary code delayed of time k*ΔT, k being an integer varying between zero and n-1, n being an integer such that n*ΔT = T, T being a time period corresponding to a time of flight of a maximum distance of a measurement range, and k varying at each time the binary code is completely received, the binary code being repeated for a predetermined time period T;
- at least one integrator circuit (330) connected to the SPAD circuit (320) for integrating a conduction time of the SPAD circuit (320) and providing an integration value of the conduction time for each time period T.

2. The lighting circuit according to claim 1, wherein the SPAD circuit (320) comprises one SPAD (321) serially connected with a polarization resistor (322) between a reference voltage and the polarization voltage, a node between the SPAD (321) and the resistor (322) being connected to the integrator circuit (330).

3. The lighting circuit according to claim 2, wherein the SPAD circuit (320) comprises several branches of one SPAD (321p) serially connected with one polarization resistor (322p), wherein each branch comprises a node between the SPAD (321p) and the polarization resistor (322p), and each node being connected to the integrator circuit (330) through a link resistor (323p).

4. The lighting circuit according to one of the claims 1 to 3, wherein the light sensor comprises at least one analog to digital converter (350) placed after the integrator circuit (330).

5. The lighting circuit according to one of the claims 1 to 3, wherein the time duration of the binary code emitted by the light emitter (200) is equal to the time period T, and wherein the light sensor (300) further comprises:
- at least a first memorization means (360) connected to the at least one integrator circuit (330) for memorizing the integration value of the conduction time at the end of each time period T,
- at least a second memorization means (370, 371) for memorizing a reference value and an associated delay,
- at least one comparator (380, 381) connected to the at least one first and second memorization means for comparing at the end of each time period T the integration value with the reference value and for storing the highest value in the second memorization means (370, 371) together with the corresponding value of k.

6. The lighting circuit of claim 5, wherein the light sensor (300) comprises at least one analog to digital converter (350) placed between the integrator circuit (330) and the first memorization means (360).

7. The lighting circuit according to claim 5 or 6, wherein the light sensor (300) comprises a plurality of SPAD circuits (320) arranged in a matrix, each SPAD circuit being connected to an integrator circuit (330), and the light sensor comprises the first memorization means (360) equal to the number of SPAD circuits.

8. The lighting circuit according to claim 6 and 7, wherein the number of analog to digital converters (350) is lower than the number of SPAD circuits (320).

9. The lighting circuit according to claim 5, wherein the second memorization means (371) is included in a memory, and the comparator (381) is a processor.

10. The lighting circuit according to one of the claims 1 to 9, wherein said light sensor (300) is built into a single integrated circuit.

11. A lighting system intended to measure a distance comprising:
- a code generator (400) providing repeatably a binary code,
- a light source (200) connected to the code generator (400) for emitting light modulated based on the binary code,
- a light sensor (300) according to one of the claims 1 to 10, said sensor (300) being connected to the code generator (400).

12. The system of claim 11, wherein the light source (200) is a vehicle headlight.

13. A method for measuring a distance using a time of flight of light, said method comprising the following steps:
- emitting (1000) light modulated repeatably based on a binary code;
- receiving a reflection of said modulated light;
- measuring a delay between the emission and the reception of the light, wherein measuring the delay comprises for each time the binary code is completely received, the steps of :
- polarizing (1020) a single-photon avalanche diode with a polarization voltage modulated by the binary code delayed of time k*ΔT, k being an integer varying from zero to n-1, n being an integer such that n*ΔT = T, T being a time period corresponding to a time of flight of a maximum distance of a measurement range, and k varying at each time the binary code is completely received, the binary code being repeated for a predetermined time period T;
- integrating (1030) the conduction time of the single-photon avalanche diode for each value of k;
- comparing (1040) the integrated value of conduction time with a reference value; and
- if the integrated value of conduction time is higher than the reference value, memorizing (1050) the integrated value of conduction time to be the reference value for next time period T and the corresponding value of k;
and wherein, after n time periods T, providing (1080) the memorized value of k as the delay corresponding to the delay between the emission and the reception of said binary code.

14. The method of claim 13, wherein the step of comparing (1040) the integrated value is made in parallel with a step of integrating (1030) for another value of k.

15. The method according to one of the claims 13 or 14, wherein the method comprises, after n time periods T and before providing (1080) the memorized value of k as the delay corresponding to the delay between the emission and the reception of said binary code the following steps:
- making a statistic analysis (1090) of all the integrated values of conduction time for determining a real maximum correlation value,
- providing (1100) the memorized value of k together with the reference value,
- filtering (1110) the value of k by deletion of the value of k when the corresponding reference value is not a real maximum correlation value.
